# EUROPEAN PATENT APPLICATION

(11) **EP 4 717 726 A1**
(43) Date of publication of application: **01.04.2026**
(21) Application number: 24811475.3
(22) Date of filing: 22.05.2024
(51) Int. Cl.: C08J 3/075, C08L 101/12, C08K 3/10

(54) **ADHESION CONTROL OF HYDROGEL**

(30) Priority: 22.05.2023 KR 20230065400; 21.05.2024 KR 20240065805
(71) Applicant: Daegu Gyeongbuk Institute of Science and Technology, Daegu 42988 (KR)
(72) Inventor: JEONG, Sang Won, Daegu 42255 (KR)
(74) Representative: Kraus & Lederer PartGmbB
(86) International application number: PCT/KR2024/095829
(87) International publication number: WO 2024/242540

(57) **Abstract**

The present invention relates to adhesion control of a hydrogel. Even if a metal cation having weak interaction with a low-molecular-weight polymer or an anionic polymer is used, the hydrogel enables stable interaction thereof. The hydrogel achieves high mechanical strength and excellent elasticity through enhanced physical cross-linking, thereby enabling low adhesion to be maintained even if being continuously and repeatedly stretched and contracted, and has excellent compatibility with a particulate material such as sand and the like, thereby having unique tactile properties while maintaining a constant exterior, and thus can be utilized as a material suitable for various industrial applications such as medical uses, environmental purification, biomaterials and the like.

## Description

### [Technical Field]

The present invention relates to adhesion control of a hydrogel.

### [Background Art]

In recent years, as demand for learning and play materials of infants and children increases, technological development of artificial sand and clay which may replace natural sand or clay is actively underway. Clay, which is traditionally used in handcrafts and the like, provides flexibility and moldability to allow creation of a sculpture in the desired shape, and maintains the shape for a long time after drying.

In addition, since play materials such as an artificial clay are, in particular, handled by infants with a strong desire for taste, there is concern that the infants may taste or eat the materials, and thus, the materials should be harmless to the human body and environmentally friendly, and maintain a constant exterior even with continuous stretching and contraction. However, since initial clay is composed of inorganic materials and water, it is heavy and causes moisture to evaporate quickly, and thus, has problems such as deteriorated moldability and surface cracking.

In order to solve the problems, an artificial clay manufactured using anionic polymers and various additives has been introduced into the market. As an example, the artificial clay has been developed by mixing an anionic polymer and a multivalent metal cation to prepare a hydrogel.

Some existing problems were solved by the innovation, but a new problem has arisen. For example, when the molecular weight of the anionic polymer is low, these polymers do not sufficiently react with the multivalent metal cations, so that required chain entanglement and crosslinking density are not achieved, and thus, fatal problems such as showing liquid or flowability still exist. The problems become more pronounced when an interaction between the polymer and the metal cation is inherently weak. In particular, when an anionic polymer such as a polyacrylic acid reacts with a multivalent metal cation such as a magnesium ion, a crosslinked hydrogel is not formed even with an addition of sufficient excess.

In particular, the problem is fatal in a hydrogel for toys. Since the hydrogel for toys has low viscosity, it is preferred that it does not stick to the hand, but when the interaction between the anionic polymer and the multivalent metal cation is weak, in the case in which the molecular weight of the polymer is low, viscosity is excessively increased to restrict its use. Due to the problems, there is a restriction on the development and application of the hydrogel, and in particular, use in infant products requiring safety and environmental friendliness is greatly restricted.

Therefore, research and development of a hydrogel which may maintain a stable exterior even with a low molecular weight polymer by strengthening an interaction between a polymer and a metal cation, and an artificial clay including the hydrogel are desperately needed.

### [Disclosure]

### [Technical Problem]

In order to solve the above problems, an object of the present invention is to provide a hydrogel which allows a stable interaction even when a metal cation having a weak interaction with a low molecular weight polymer or an anionic polymer is used and has low adhesion by having improved elasticity as compared with a hydrogel of the prior art having dominant viscosity.

Another object of the present invention is to provide an artificial clay including the hydrogel described above.

### [Technical Solution]

In order to achieve the above object, the present inventors continuously studied in order to develop a hydrogel allowing a stable interaction between a polymer and a metal cation even when a metal cation having a weak interaction between a low molecular weight polymer or an anionic polymer is used, and as a result, found that when an alkali metal halide is used with the anionic polymer and the multivalent metal cation, the adhesion of a hydrogel having dominant viscosity may be adjusted, and specifically, the viscosity of the hydrogel may be lowered and the elasticity of the hydrogel may be increased, thereby completing the present invention.

In one general aspect, a hydrogel includes: an anionic polymer, a multivalent metal cation, an alkali metal halide, and water.

According to an exemplary embodiment, the alkali metal halide may include any one cation selected from lithium (Li), sodium (Na), potassium (K), rubidium (Rb), cesium (Cs), francium (Fr), and the like and any one anion selected from fluorine (F), chlorine (Cl), bromine (Br), iodine (I), and the like.

According to an exemplary embodiment, the alkali metal halide may be included at 1 to 40 wt% with respect to the total weight.

According to an exemplary embodiment, the anionic polymer may include a repeating unit derived from any one monomer selected from acrylic acid, methacrylic acid, or a mixture thereof.

According to an exemplary embodiment, a functional group of the anionic polymer may include carboxylic acid, a salt thereof, or a combination thereof.

According to an exemplary embodiment, the anionic polymer may have a weight average molecular weight of 10,000 to 2,000,000 g/mol.

According to an exemplary embodiment, the multivalent metal cation may include any one or two or more cations selected from the group consisting of a calcium ion, a magnesium ion, and an iron (II) ion.

According to an exemplary embodiment, the multivalent metal cation may be derived from any one or a combination of two or more selected from the group consisting of a magnesium chloride hexahydrate (MgCl₂ ·6H₂O), a calcium chloride hexahydrate (CaCl₂ ·6H₂O), an iron sulfate (II) heptahydrate (FeSO₄ ·7H₂O) , and the like.

According to an exemplary embodiment, the multivalent metal cation may be included at 20 wt% or more with respect to the total weight.

According to an exemplary embodiment, a mole ratio of the functional group of the anionic polymer to the multivalent metal cation may be 1:0.1 to 2.

According to an exemplary embodiment, the water may be included at 20 to 95 wt%.

In another general aspect, an artificial clay includes the hydrogel described above and a particulate material.

### [Advantageous Effects]

The hydrogel of the present invention may be formed into a hydrogel which is stable even with a low molecular weight polymer, by introducing an alkali metal halide to effectively strengthen an interaction between a polymer and a metal cation. The hydrogel achieves high mechanical strength and excellent elasticity through enhanced physical crosslinking, thereby maintaining low adhesive strength even with repetition of continuous stretching and contraction, and has excellent compatibility with a particulate material such as sand, thereby having unique tactile properties while maintaining a constant exterior, and thus may be utilized as a material suitable for various industrial applications such as medical uses, environmental purification, and biomaterials.

### [Description of Drawings]

FIG. 1 is an image of a hydrogel having low adhesion prepared according to Example 1.
FIG. 2 is an image of a hydrogel having low adhesion prepared according to Example 2.
FIG. 3 is an image of a hydrogel having high adhesion prepared according to Comparative Example 1.

### [Best Mode]

Hereinafter, the present invention will be described in detail so as to be easily practiced by a person skilled in the art to which the present invention pertains. However, the present invention may be implemented in various different forms and is not limited to the implementations described herein. In addition, it is not intended to limit the protection scope defined in the claims.

In addition, technical terms and scientific terms used in the description of the present invention have the general meaning understood by a person skilled in the art unless otherwise defined, and description for the known function and configuration obscuring the present invention will be omitted in the following description.

Unless otherwise particularly defined in the present invention, "comprising" any elements will be understood to imply further inclusion of other elements rather than the exclusion of any other elements. In addition, the singular form used in the specification and claims appended thereto may be intended to also include a plural form, unless otherwise indicated in the context.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification may include all values within the range including the lower limit and the upper limit, increments logically derived in a form and span in a defined range, all double limited values, and all possible combinations of the upper limit and the lower limit in the numerical range defined in different forms. Unless otherwise particularly defined in the present specification, values which may be outside a numerical range due to experimental error or rounding off of a value are also included in the defined numerical range.

The present invention provides a hydrogel including: an anionic polymer, a multivalent metal cation, an alkali metal halide, and water. Since the anionic polymer, the multivalent metal cation, and the alkali metal halide form an ionic composite by electrostatic attraction, the hydrogel includes two or more physical crosslinking points, and the elasticity of the hydrogel may be improved by the physical crosslinking points. Herein, the adhesion/adhesive strength of the hydrogel in the present specification refers to a sticky form such as sticking to the hand due to a characteristic in which viscosity is more dominant than elasticity. In the present invention, in order to solve the problem of a conventional hydrogel of showing high adhesion, an anionic polymer, a multivalent metal cation, and an alkali metal halide are included, thereby lowering viscosity and increasing elasticity in a hydrogel having high adhesion to prepare a hydrogel having low adhesion.

According to an exemplary embodiment, any anionic polymer may be used without limitation as long as it is a polymer including an anionic functional group, and specifically, may be any one or a mixture of two or more selected from the group consisting of acryl-based anionic polymers, sugar-based anionic polymers, and vinyl-based anionic polymers, but is not limited thereto.

Any vinyl-based anionic polymer may be used without limitation as long as it is a polymer including the anionic functional group in the side chain of the hydrocarbon chain.

In addition, the sugar-based anionic polymer may be, though not limited thereto, specifically for example, any one or a mixture of two or more alginate, pectin, carboxymethyl cellulose, hyaluronic acid, xanthan gum, and the like.

According to an exemplary embodiment, any acryl-based anionic polymer may be used without limitation as long as it is an acryl-based polymer prepared by polymerizing one or two or more acryl-based monomers including an anionic functional group, and the anionic functional group may include any one or two or more selected from carboxylic acid, sulfonic acid, sulfuric acid, phosphoric acid, phosphorus acid, and salts thereof, specifically carboxylic acid, a salt thereof, or a combination thereof.

According to an exemplary embodiment, the acryl-based anionic polymer may contain a repeating unit derived from any one monomer selected from acrylic acid, methacrylic acid, or a mixture thereof, specifically an acrylic acid-derived repeating unit, these may take a salt form with an appropriate base, and the salt form is also included in the range of the present invention. In addition, the acrylic acid, the methacrylic acid, or the mixture thereof may be polymerized to produce polyacrylic acid, polymethacrylic acid, or polyacrylic acid-co-methacrylic acid. The acryl-based anionic polymer is polymerized and may be used as an anionic polymer in the form of a homopolymer, but may be copolymerized with a polar comonomer such as nonionic monomers or other anionic monomers and used in the form of a copolymer.

A specific example of the copolymerizable polar monomer may include methyl acrylate, ethyl acrylate, propyl acrylate, isopropyl acrylate, butyl acrylate, isobutyl acrylate, t-butyl acrylate, pentyl acrylate, isopentyl acrylate, 2-ethylhexyl acrylate, isooctyl acrylate, nonyl acrylate, isononyl acrylate, dodecyl acrylate, and stearyl acrylate, methyl methacrylate, ethyl methacrylate, propyl methacrylate, isopropyl methacrylate, butyl methacrylate, isobutyl methacrylate, t-butyl methacrylate, pentyl methacrylate, isopentyl methacrylate, 2-ethylhexyl methacrylate, isooctyl methacrylate, nonyl methacrylate, isononyl methacrylate, dodecyl methacrylate, stearyl methacrylate, and the like, but is not limited thereto.

The copolymerizable polar comonomer may be included at 0 to 40 mol%, specifically 1 to 20 mol%, more specifically 5 to 10 mol% with respect to the total moles of the entire monomer.

The hydrogel according to an embodiment may have more dominant elasticity than viscosity, due to formation of a physical crosslinking point by an electrostatic attraction of any one or two or more of between the anionic polymer and the multivalent metal cation, between the anionic polymer and the alkali metal cation of the alkali metal halide, between the ionized anionic group of the anionic polymer and the multivalent metal cation, and between the ionized anionic group of the anionic polymer and the alkali metal cation of the alkali metal halide.

In addition, the anionic polymer may include a part where a physical crosslinking point is not formed in the chain, together with the physical crosslinking point. A part where the ionic composite is not formed may be ionic or nonionic. For example, both an anionic segment consisting of a series of repeating units including an anionic group (carboxylic group) and a nonionic segment consisting of a series of repeating unit including a nonionic group may be included in the main chain of the anionic polymer. More specifically, for example, a cross-copolymer formed by an intersection of an anionic segment and a nonionic segment, a block copolymer, a multiblock copolymer, and the like may be included, but the present invention is not limited thereto.

As another embodiment of the present invention, the anionic polymer may include a part of forming an ionic composite in one polymer chain and a part of being present in dissolved or swollen in water without forming the ionic composite. Since the hydrogel in this form partially includes a physical crosslinking point, it may form an ionic composite to improve elasticity. In addition, a part of not forming the physical crosslinking point may be aqueous, and thus, hydrated to form the hydrogel.

According to an exemplary embodiment, the functional group of the anionic polymer may be carboxylic acid, a salt thereof, a combination thereof, and specifically, may include carboxylic acid, a metal salt thereof, or a combination thereof. The metal salt may be an alkali metal salt, specifically, any one or a combination of two or more selected from lithium (Li), sodium (Na), potassium (K), rubidium (Rb), and the like.

According to an exemplary embodiment, the anionic polymer may have a weight average molecular weight of 10,000 to 2,000,000 g/mol, 10,000 to 1,500,000 g/mol, 10,000 to 1,000,000 g/mol, 10,000 to 800,000 g/mol, 10,000 to 500,000 g/mol, or 10,000 to 200,000 g/mol. In the conventional technology, when a low molecular weight anionic polymer having a molecular weight of 500,000 g/mol or less is used, it was difficult to prepare a stable hydrogel due to high adhesion, but according to an exemplary embodiment, when the alkali metal halide described later is added so as to satisfy specific conditions, a hydrogel having low adhesion with more dominant elasticity than viscosity may be prepared by adjusting adhesion.

According to an exemplary embodiment, the anionic polymer may be included at 1 to 50 wt%, 5 to 40 wt%, 5 to 20 wt%, or 5 to 15 wt% with respect to the total weight.

According to an exemplary embodiment, the multivalent metal cation may be any one or a mixture of two or more selected from alkaline earth metal ions or multivalent transition metal ions, and specifically for example, any one or two or more cations selected from magnesium (II), calcium (II), strontium (II), barium (II), iron (II), iron (III), nickel (II), copper (II), zinc (II), and aluminum (III) ions, specifically any one or two or more cations selected from the group consisting of a calcium ions, a magnesium ion, an iron (II) ions, and the like.

According to an exemplary embodiment, the multivalent metal cation may be derived from a salt or salt hydrate containing a multivalent metal cation, and may be derived from any one or a combination of two or more selected from the group consisting of magnesium chloride (MgCl₂), a magnesium chloride hydrate (MgCl₂ ·xH₂O, wherein x is an integer of 1 to 10), magnesium nitrate (Mg(NO₃)₂), a magnesium nitrate hydrate (Mg(NO₃)₂·xH₂O, wherein x is an integer of 1 to 10), calcium chloride (CaCl₂), a calcium chloride hydrate (CaCl₂ ·xH₂O, wherein x is an integer of 1 to 10), calcium nitrate (Ca(NO₃)₂), a calcium nitrate hydrate (Ca(NO₃)₂ ·xH₂O, wherein x is an integer of 1 to 10), iron sulfate (II) (FeSO₄), an iron sulfate (II) hydrate (FeSO₄ ·xH₂O, wherein x is an integer of 1 to 10), and the like.

According to an exemplary embodiment, the hydrogel may include a salt or a salt hydrate form containing the above-described types of multivalent metal cations, and the content of the multivalent metal cation described in the present specification may refer to the content of the salt of salt hydrate containing the multivalent metal cation.

According to an exemplary embodiment, the multivalent metal cation may be included at 10 wt% or more, 15 wt% or more, 20 wt% or more, or 20 to 40 wt%.

According to an exemplary embodiment, a mole ratio of the functional group of the anionic metal salt polymer to the multivalent metal cation may be 1:0.1 to 5, 1:0.3 to 3, 1:0.5 to 2, 1:0.7 to 1.5, 1:0.8 to 1.2, or 1:0.9 to 1.1.

According to an exemplary embodiment, the alkali metal halide may include an alkali metal cation and a halogen anion, and specifically, may include any one cation selected from lithium (Li), sodium (Na), potassium (K), rubidium (Rb), cesium (Cs), francium (Fr), and the like and any one anion selected from fluorine (F), chlorine (Cl), bromine (Br), iodine (I), and the like.

According to an exemplary embodiment, when the alkali metal halide is included in the hydrogel, it may be in a state of being ionized into a cation and an anion, or in a state of an alkali metal halide salt or a mixture thereof. When it is in a state of being ionized, the cation of the alkali metal halide may form a physical crosslinking point with the anionic functional group of the anionic polymer described above.

According to an exemplary embodiment, the alkali metal halide may be included at 1 to 40 wt%, 1 to 35 wt%, 1 to 30 wt%, 1 to 20 wt%, 2 to 10 wt%, 3 to 7.5 wt%, with respect to the total weight. When the range is satisfied, lower adhesion may be implemented.

According to an exemplary embodiment, the hydrogen ion concentration of the hydrogel may be neutral, and specifically, may have a pH of 4 to 10 or 6 to 8. Herein, it is preferred that the hydrogel does not include an additional base or acidic material in order to maintain neutrality.

The present invention may provide an artificial clay including the hydrogel described above and a particulate material. Since the artificial clay includes a particulate material in the hydrogel described above, unique tactile properties may be imparted to the hydrogel. The particulate material may be any one or a mixture of two or more selected from sand, glass balls, metal oxide particles, polymer fine particles, and granular materials, but is not limited thereto, and may be appropriately selected depending on its use. In addition, the size of the particulate material may be 0.02 mm to 0.5 mm, and the particulate material may be included at 1 to 98 vol%, more specifically 5 to 60 vol% with respect to 100 vol% of the total volume of the hydrogel, but is not limited thereto, and may be appropriately adjusted depending on its purpose.

According to an exemplary embodiment, the artificial clay may further include any one or more wetting agents selected from the group consisting of nonionic polymers, cationic polymers, glycol-based compounds, α-hydroxy acid, polyhydric alcohols, urea, and the like. The wetting agent has a moisturizing effect to maintain moisture, may prevent the hydrogel from drying out and losing its characteristics when the hydrogen is left in the air for a long time, and thus, may extend its lifespan.

According to an exemplary embodiment, as the wetting agent, any one or a mixture of two or more selected from starch such as tapioca starch, wheat starch, corn starch, potato starch, and sweet potato starch may be used, and by using the starch, the wetting agent may be smoothly formed on the surface of the hydrogel, and is effective for maintaining a constant exterior and has good tactile sensation. In addition, since the starch is edible, it is harmless to the body and environmentally friendly even when infants and children swallow the clay composition.

Hereinafter, the present invention will be described in more detail with reference to the examples and the comparative examples. However, the following examples and comparative examples are only examples for describing the present invention in more detail, and do not limit the present invention in any way.

### [Method for evaluating physical properties]

### 1. Evaluation of adhesive properties

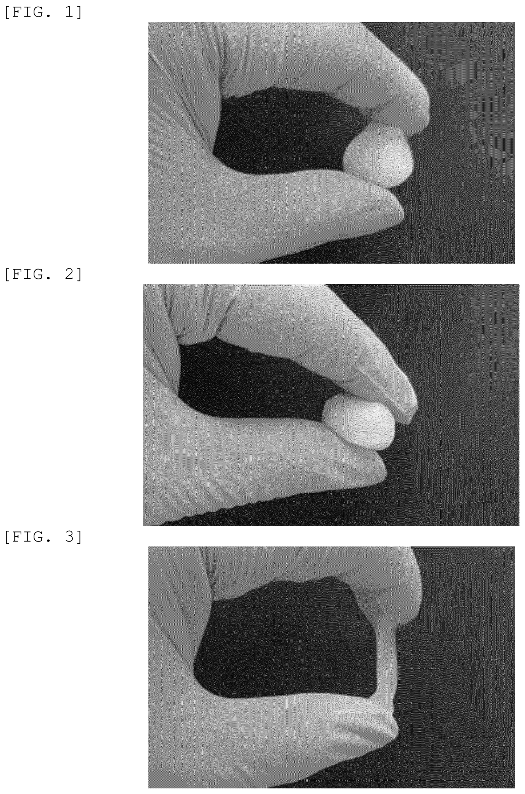

Adhesion was evaluated according to the following criteria.
∘: A hydrogel having low adhesion and not sticking to the hand was formed, as shown in FIGS. 1 and 2.
△: A hydrogel having high adhesion and sticking to the hand was formed, as shown in FIG. 3.
×: Viscose solution state or phase separation was shown.

### [Example 1]

A 5 N sodium hydroxide aqueous solution was added to 4.0 g of a 25 wt% polyacrylic acid (poly(acrylic acid), molecular weight: 100,000 g/mol) aqueous solution to adjust the pH to 7.0, 4.2 g of a saturated sodium chloride solution was added, stirring was performed, 4.2 g of 66.7 wt% a magnesium chloride hexahydrate was added, and stirring was performed, thereby preparing 3.9 g of a hydrogel. At this time, a mole ratio between the anionic functional group of the polyacrylic acid and the magnesium ion was 1.0:1.0, the content of sodium chloride was 7.2 wt%, and the prepared hydrogel result having low adhesion is shown in FIG. 1.

### [Example 2]

The process was performed in the same manner as in Example 1, except that 2.1 g instead of 4.2 g of the saturated sodium chloride solution was added. At this time, a mole ratio between the anionic functional group of the polyacrylic acid and the magnesium ion was 1.0:1.0, the content of sodium chloride was 4.2 wt%, and the prepared hydrogel result having low adhesion is shown in FIG. 2.

### [Example 3]

The process was performed in the same manner as in Example 2, except that 2.1 g instead of 4.2 g of the magnesium chloride hexahydrate was added. At this time, a mole ratio between the anionic functional group of the polyacrylic acid and the magnesium ion was 1.0:0.5, the content of sodium chloride was 4.9 wt%, and a hydrogel having high adhesion was finally obtained.

### [Example 4]

The process was performed in the same manner as in Example 3, except that 3.3 g instead of 2.1 g of the saturated sodium chloride solution was added. At this time, a mole ratio between the anionic functional group of the polyacrylic acid and the magnesium ion was 1.0:1.0, the content of sodium chloride was 7.0 wt%, and a hydrogel having high adhesion was finally obtained.

### [Comparative Example 1]

The process was performed in the same manner as in Example 1, except that the saturated sodium chloride solution was not added. At this time, a mole ratio between the anionic functional group of the polyacrylic acid and the magnesium ion was 1.0:1.0, a hydrogel having high adhesion was finally obtained, and the image of the corresponding hydrogel is shown in FIG. 3.

**[Table 1]**

| | Amount of saturated sodium chloride solution added [g] | Amount of 66.7 wt% magnesium chloride hexahydrate added [g] | Content of sodium chloride [wt%] | Mole ratio between anionic functional group and magnesium ion | Evaluation of adhesion |
|---|---|---|---|---|---|
| Example 1 | 4.2 | 4.2 | 7.2 | 1.0:1.0 | ○ |
| Example 2 | 2.1 | 4.2 | 4.2 | 1.0:1.0 | ○ |
| Example 3 | 2.1 | 2.1 | 4.9 | 1.0:0.5 | △ |
| Example 4 | 3.3 | 2.1 | 7.0 | 1.0:1.0 | △ |
| Comparative Example 1 | - | 4.2 | - | 1.0:1.0 | △ |

As shown in Table 1, in the comparative example including no sodium chloride, a hydrogel having very high adhesive strength was formed. However, in the examples including sodium chloride, in particular, Example 1 and 2, sodium chloride was added at various ratios to adjust the content and ratio of sodium chloride, thereby lowering the viscosity and improving elasticity of the hydrogel, and the prepared hydrogels had high mechanical strength and low adhesion by reinforced crosslinking.

As shown in FIGS. 1 and 2, the hydrogels prepared according to Examples 1 and 2 had decreased viscosity and improved elasticity to show low adhesion, while the hydrogel of Comparative Example 1 had very dominant viscosity to have high adhesion, as shown in FIG. 3. In addition, in Examples 1 and 2 rather than Examples 3 and 4, it was confirmed that since the anionic polymer, the multivalent metal cation, the alkali metal halide, and water were included in the specific content ranges, low adhesion to be desired was able to be shown.

It was confirmed from the results that the hydrogel of the present invention provides excellent structural stability which may not be implemented in the conventional methods, and in particular, the interaction between the polymer and the metal cation is reinforced to form a hydrogel which is stable even with a low molecular weight polymer.

Hereinabove, although the present invention has been described by specific matters, limited exemplary embodiments, and drawings, they have been provided only for assisting the entire understanding of the present invention, and the present invention is not limited to the exemplary embodiments, and various modifications and changes may be made by those skilled in the art to which the present invention pertains from the description.

Therefore, the spirit of the present invention should not be limited to the above-described exemplary embodiments, and the following claims as well as all modifications equal or equivalent to the claims are intended to fall within the scope and spirit of the invention.

## Claims

1. A hydrogel comprising: an anionic polymer, a multivalent metal cation, an alkali metal halide, and water.

2. The hydrogel of claim 1, wherein the alkali metal halide includes any one cation selected from lithium (Li), sodium (Na), potassium (K), rubidium (Rb), cesium (Cs), and francium (Fr) and any one anion selected from fluorine (F), chlorine (Cl), bromine (Br), and iodine (I).

3. The hydrogel of claim 1, wherein the alkali metal halide is included at 1 to 40 wt% with respect to the total weight.

4. The hydrogel of claim 1, wherein the anionic polymer includes a repeating unit derived from any one monomer selected from acrylic acid, methacrylic acid, or a mixture thereof.

5. The hydrogel of claim 1, wherein a functional group of the anionic polymer includes carboxylic acid, a salt thereof, or a combination thereof.

6. The hydrogel of claim 1, wherein the anionic polymer has a weight average molecular weight of 10,000 to 2,000,000 g/mol.

7. The hydrogel of claim 1, wherein the multivalent metal cation includes any one or two or more cations selected from the group consisting of a calcium ion, a magnesium ion, and an iron (II) ion.

8. The hydrogel of claim 1, wherein the multivalent metal cation is derived from any one or a combination of two or more selected from the group consisting of magnesium chloride (MgCl₂), a magnesium chloride hydrate (MgCl₂·xH₂O), magnesium nitrate (Mg(NO₃)₂), a magnesium nitrate hydrate (Mg(NO₃)₂ ·xH₂O), calcium chloride (CaCl₂), a calcium chloride hydrate (CaCl₂·xH₂O), calcium nitrate (Ca(NO₃)₂), a calcium nitrate hydrate (Ca(NO₃)₂·xH₂O), iron sulfate (II) (FeSO₄), and an iron sulfate (II) hydrate (FeSO₄·xH₂O).

9. The hydrogel of claim 1, wherein a mole ratio of the functional group of the anionic polymer to the multivalent metal cation is 1:0.1 to 2.

10. An artificial clay comprising the hydrogel of any one of claims 1 to 9 and a particulate material.
